# EUROPEAN PATENT APPLICATION

(11) **EP 4 818 666 A1**
(43) Date of publication of application: **07.10.2026**
(21) Application number: 23960188.3
(22) Date of filing: 30.11.2023
(51) Int. Cl.: G01M 3/20, G01N 21/64, G01N 21/91

(54) **FLUORESCENCE TEST SOLUTION**

(71) Applicant: SMC Corporation, Tokyo 104-0031 (JP)
(72) Inventor: KAWAMURA Youichi, Chiba 277-0871 (JP); OKUHIRA Hiroyuki, Chiba 277-0871 (JP); YOSHIDA Yasunori, Chiba 277-0871 (JP)
(74) Representative: Keil & Schaafhausen Patentanwälte PartGmbB
(86) International application number: PCT/JP2023/042896
(87) International publication number: WO 2025/115170

(57) **Abstract**

This fluorescence test solution contains: water as a solvent; and a flavin derivative as a blue fluorescent dye that emits blue fluorescence. The flavin derivative has a flavin skeleton and uses riboflavin as a starting material.

## Description

### TECHNICAL FIELD

The present invention relates to a fluorescent inspection liquid (fluorescence test solution) used for a leak inspection.

### BACKGROUND ART

A leak inspection is performed on equipment required to have a sealing property and a piping system in a factory or the like. As one method of the leak inspection, there is a fluorescent leak inspection method using an inspection liquid containing a fluorescent dye (fluorescent inspection liquid). JP H10-221196 A describes using food additives as fluorescent agents of fluorescent inspection liquids.

### SUMMARY OF THE INVENTION

However, regarding fluorescent inspection liquids that emit blue fluorescence (wavelengths of 360 to 500 nm), there is a problem that there is almost no fluorescent inspection liquid that is highly safe for the human body and emits fluorescence having sufficient brightness.

An example of a blue fluorescent agent is a coumarin derivative. However, coumarin derivatives are toxic to the human body, and therefore, their use in food equipment, for example, is avoided. Further, another example of the substance that emits blue fluorescence is quinine. Quinine is used as a bittering agent for soft drinks (tonic water) and the like and is a substance safe for the human body. However, since quinine has low water solubility at normal temperature, there is a problem that a fluorescent inspection liquid as an aqueous solution of quinine cannot exhibit sufficient fluorescence brightness.

Therefore, the inventors of the present application considered that there is a demand for a fluorescent inspection liquid that is excellent in safety to the human body and emits blue fluorescence having high fluorescence brightness.

The present invention has the object of solving the aforementioned problem.

An aspect of the following disclosure is characterized by a fluorescent inspection liquid containing: water; and a flavin derivative as a blue fluorescent dye that emits blue fluorescence, wherein the flavin derivative is a derivative having a flavin skeleton and prepared using riboflavin as a starting material.

The fluorescent inspection liquid of the above aspect is highly safe for the human body and emits blue fluorescence with high fluorescence brightness, and therefore can be suitably used for leak inspections in various fields.

### BRIEF DESCRIPTION OF DRAWINGS

[FIG. 1] FIG. 1 is a diagram illustrating a method for producing a flavin derivative prepared using riboflavin as a raw material;
[FIG. 2] FIG. 2A is a photograph of a fluorescent inspection liquid (first fluorescent inspection liquid) according to Experimental Example 1 under fluorescent lamp illumination in a room, and FIG. 2B is a photograph of the first fluorescent inspection liquid under ultraviolet light irradiation in a dark room;
[FIG. 3] FIG. 3A is a photograph of a metal piece coated with ultrapure water (Comparative Example 1) and dried, under indoor illumination and under ultraviolet light irradiation in Experimental Example 2, and FIG. 3B is a photograph of a metal piece coated with the first fluorescent inspection liquid (Experimental Example 1) and dried, under indoor illumination and under ultraviolet light irradiation in Experimental Example 2;
[FIG. 4] FIG. 4 is a photograph showing a result of supplying the first fluorescent inspection liquid to a simulated inspection target and then irradiating the simulated inspection target with ultraviolet light in Experimental Example 3; and
[FIG. 5] FIG. 5 is a table showing the evaluation results of a COD and a BOD for the first fluorescent inspection liquid, a second fluorescent inspection liquid, and an aqueous solution of a reference example.

### DETAILED DESCRIPTION OF THE INVENTION

### (Embodiments)

A fluorescent inspection liquid contains water serving as a solvent, and a fluorescent agent (blue fluorescent dye) that emits blue fluorescence. The blue fluorescent dye contains one or more kinds of flavin derivatives. The flavin derivative may contain a plurality of flavin derivatives produced from, for example, photodegradation (photodecomposition) of riboflavin. In one embodiment, the flavin derivative may contain, as a main component, at least one of formylmethylflavin or lumichrome obtained by photodegradation of riboflavin. For example, lumichrome (7, 8-dimethylalloxazine) has a fluorescence emission peak in the range of 450 to 480 nm, and absorbs ultraviolet light to emit blue fluorescence.

The above-described flavin derivative can generate fluorescence having brightness that can be easily visually recognized with the naked eye even at a low concentration of about 5 ppm, and is therefore suitable as a fluorescent inspection liquid. Note that the concentration of the flavin derivative contained in the fluorescent inspection liquid is not particularly limited, but can be 5 ppm or higher and 20 ppm or lower. A fluorescent inspection liquid containing the flavin derivative at a concentration of 5 ppm or higher is preferable because it exhibits fluorescence emission with sufficient brightness. In addition, a fluorescent inspection liquid containing the flavin derivative at a concentration of 20 ppm or lower is preferable from the viewpoint of satisfying the standard values (160 mg/L or less) of a COD (Chemical Oxygen Demand) and a BOD (Biochemical Oxygen Demand) defined as the sewage discharge standards in Japan. However, the concentration of the flavin derivative contained in the fluorescent inspection liquid may be higher than 20 ppm according to the environmental standards of countries and regions.

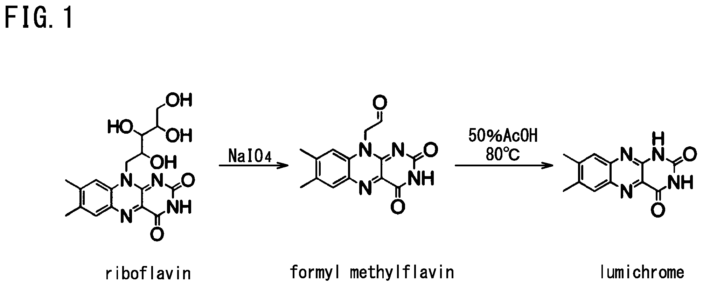

The flavin derivative is a derivative having a flavin skeleton and produced using riboflavin (vitamin B2) as a starting material. The flavin derivative of the present embodiment may contain, for example, at least one of formylmethylflavin or lumichrome as a main component. For example, as shown in FIG. 1, as the flavin derivative, formylmethylflavin may be obtained by reacting riboflavin with sodium periodate (NaIO₄). Further, the entire or a portion of the obtained formylmethylflavin may be reacted with acetic acid to obtain lumichrome as still another kind of flavin derivative.

Note that the flavin derivative may be obtained by irradiating riboflavin with light. By irradiating an aqueous solution of riboflavin with light, riboflavin is decomposed to produce flavin derivatives such as formylmethylflavin, lumiflavin, carboxymethylflavin, and lumichrome. By irradiating an aqueous solution (neutral) of riboflavin that emits green fluorescence with a sufficient amount of light, a blue fluorescent dye that emits strong blue fluorescence is obtained. Such a blue fluorescent dye can contain at least one of formylmethylflavin or lumichrome as a main component of the flavin derivative. Note that the fluorescent inspection liquid may contain lumiflavin, carboxymethylflavin, and undecomposed riboflavin, in addition to lumichrome and formylmethylflavin.

The above-described flavin derivative prepared using riboflavin as a raw material is a substance generated as a metabolite of riboflavin in the living body. When such a flavin derivative is excessively ingested, it is excreted from the living body by the metabolic machinery in the living body similar to riboflavin. Further, the flavin derivative is also contained in foods as a photodegradation product of riboflavin, and is ingested on a daily basis. Therefore, it is considered that the fluorescent inspection liquid containing the flavin derivative as a fluorescent agent has relatively low toxicity to the human body and is excellent in safety.

The fluorescent inspection liquid may further contain a preservative in order to prevent the flavin derivative from being decayed (decomposed). As the preservative, preservatives of parabens such as butylparaben, isopropylparaben, propylparaben, and ethylparaben, or preservatives of isothiazolines such as methylisothiazoline can be used. Methylparaben as a preservative is a substance used in cosmetics, pharmaceuticals, and the like, and is highly safe for the human body. In one embodiment, the amount of the preservative added can be set to, for example, 10 ppm. The fluorescent inspection liquid in which the preservative is added at a concentration of 10 ppm satisfies the food safety standards (Japan) and can be suitably used for inspection of, for example, food equipment. Further, the amount of the preservative added may be, for example, 100 ppm or lower. The fluorescent inspection liquid in which the preservative is added at a concentration of 100 ppm satisfies the standards for medicines and medical equipment (Japan), and can be safely used in applications in which it is not orally ingested by humans.

### (Experimental Example 1)

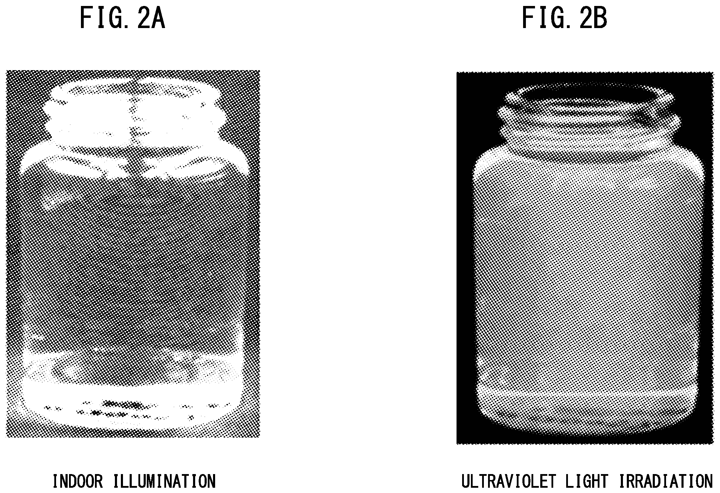

In Experimental Example 1, the color of a fluorescent inspection liquid (hereinafter referred to as a first fluorescent inspection liquid) containing a flavin derivative at a concentration of 5 ppm was examined. Note that the flavin derivative of Experimental Example 1 was obtained by photodegradation of an aqueous solution of riboflavin. Note that the fluorescent inspection liquid containing the flavin derivative at a concentration of 5 ppm is an aqueous solution obtained by subjecting an aqueous solution of riboflavin at a concentration of 5 ppm to photodegradation. That is, the concentration of charged riboflavin as a raw material is referred to as the concentration of the flavin derivative in the experimental example. As shown in FIG. 2A, the first fluorescent inspection liquid was colorless and transparent under indoor illumination. On the other hand, as shown in FIG. 2B, it was confirmed that, when irradiated with ultraviolet light in a dark room, the first fluorescent inspection liquid emitted blue fluorescence having brightness that was easily visually recognized.

### (Experimental Example 2)

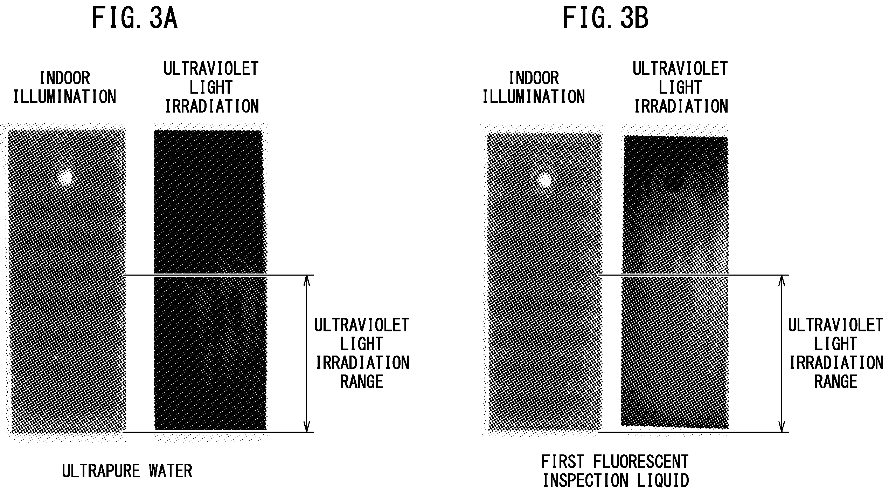

In Experimental Example 2, whether or not the first fluorescent inspection liquid after drying emitted light under irradiation with ultraviolet light was examined. In Experimental Example 2, two rectangular metal pieces were prepared, and one of the metal pieces was immersed in ultrapure water (Comparative Example 1), and the other was immersed in the first fluorescent inspection liquid (see Experimental Example 1). The two metal pieces were then dried. Next, the surfaces of the dried metal pieces were observed under indoor illumination and under ultraviolet light irradiation in the dark room. FIG. 3A shows photographs of the metal piece immersed in ultrapure water. As shown in the figure, the metal piece immersed in ultrapure water was colorless under indoor illumination. In addition, the metal piece did not exhibit color development by fluorescence even under irradiation with ultraviolet light in the dark room.

FIG. 3B shows photographs of the metal piece immersed in the first fluorescent inspection liquid. The metal piece immersed in the first fluorescent inspection liquid did not emit fluorescence under indoor illumination. It was confirmed that the metal piece after drying the first fluorescent inspection liquid thereon emitted blue fluorescence under ultraviolet light irradiation. The fluorescence on the surface of this metal piece had a color tone and brightness that enabled the fluorescence to be clearly distinguished from blue-violet illumination light emitted together with the ultraviolet light from a black light serving as the light source of the ultraviolet light. From this result, it was confirmed that the first fluorescent inspection liquid maintained a state of emitting fluorescence even after being dried, and was suitable for identifying a leakage area. Moreover, it was confirmed whether or not the fluorescence disappeared by running water on the metal piece to which a fluorescent agent of the first fluorescent inspection liquid was attached. As a result, it was confirmed that the fluorescence disappeared only by supplying running water, and the fluorescent agent contained in the first fluorescent inspection liquid could be easily washed away with running water.

### (Experimental Example 3)

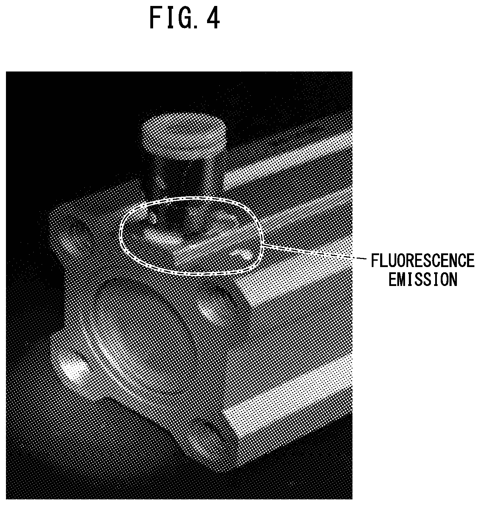

In Experimental Example 3, a leak inspection was performed by supplying the first fluorescent inspection liquid to an air cylinder serving as a simulated inspection target as shown in FIG. 4. The simulated inspection target is an air cylinder having a port to which an air pipe is connected, and looseness (leakage area) is intentionally provided at a connection portion between the port and the air pipe. In Experimental Example 3, the first fluorescent inspection liquid was filled in a lubricator and supplied in a state of being sprayed in a mist form into compressed air. The mist of the first fluorescent inspection liquid was supplied to the inside of the simulated inspection target together with the compressed air.

As shown in the figure, in the leak inspection of Experimental Example 3, the first fluorescent inspection liquid leaked at the leakage area. The leakage of the first fluorescent inspection liquid was confirmed as blue fluorescence as a result of irradiation with ultraviolet light. It was confirmed that the leakage area could be easily identified from the area where the fluorescence was most strongly emitted. It was also confirmed that the leakage flow rate at the leakage area could be estimated from the distribution state of the first fluorescent inspection liquid scattered around the leakage area.

### (Experimental Example 4)

In Experimental Example 4, the COD and the BOD of the first fluorescent inspection liquid and a second fluorescent inspection liquid were evaluated. The second fluorescent inspection liquid is an inspection liquid obtained by adding 100 ppm of methyl parahydroxybenzoate as a preservative to the first fluorescent inspection liquid. The COD is a value obtained by converting, into the amount of oxygen, the amount of an oxidizing agent consumed when organic substances contained in a fluorescent inspection liquid are oxidized with potassium permanganate. Further, the BOD is a value obtained by measuring the amount of oxygen consumed by microorganisms in water through growth and respiration in a measurement period of 5 days at 20 °C in the presence of dissolved oxygen in water.

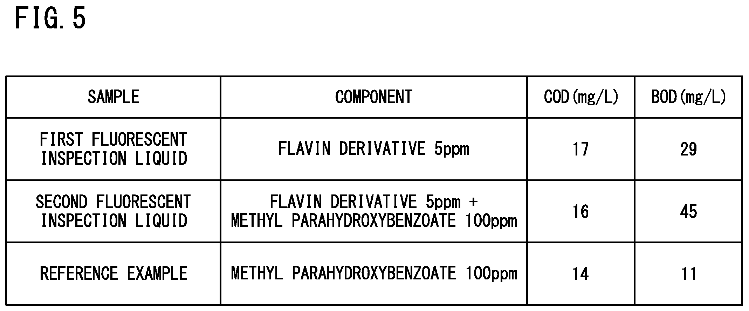

As shown in FIG. 5, the first fluorescent inspection liquid of Experimental Example 1 had a COD of 17 mg/L and a BOD of 29 mg/L. Further, the second fluorescent inspection liquid had a COD of 16 mg/L and a BOD of 45 mg/L. From these results, it was confirmed that the first fluorescent inspection liquid and the second fluorescent inspection liquid both had the COD and the BOD below the standards of COD 160 mg/L and BOD 160 mg/L at which discharge to the sewer is regulated, and no problem occurred in discharge to the sewer. Note that FIG. 5 shows, as a reference example, the COD and the BOD of an aqueous solution containing methyl parahydroxybenzoate, which is a preservative, at a concentration of 100 ppm. As shown by the reference example, an increase in COD and BOD due to the addition of the preservative is relatively small.

Note that, after the leak inspection, the equipment to be inspected is washed with water to wash out the fluorescent inspection liquid. In this washing, the fluorescent inspection liquid is usually diluted by a factor of 200 or more. Therefore, the values of the COD and the BOD of the first fluorescent inspection liquid or the second fluorescent inspection liquid actually discharged through the sewer or the like are 1/200 or less of the values shown in FIG. 5. Therefore, the first fluorescent inspection liquid or the second fluorescent inspection liquid satisfies the emission standards (for example, 8 to 10 mg/L for the COD and the BOD) to the lake and the sea area when used under the normal use conditions.

### (Modification of Embodiment)

In the present modification, an example of studying multi-coloring of a fluorescent inspection liquid by adding a red fluorescent dye or a green fluorescent dye to the above-described fluorescent inspection liquid will be described.

In Modification 1, a study was conducted on a fluorescent inspection liquid obtained by adding riboflavin to the flavin derivative of the present embodiment that emits blue fluorescence. While riboflavin emitted yellow-green fluorescence, the fluorescent inspection liquid obtained by mixing the flavin derivative of the present embodiment and riboflavin emitted green fluorescence (wavelengths of 500 to 570 nm). In addition, by increasing the ratio of the flavin derivative of the present embodiment, a fluorescent inspection liquid that emitted blue-green fluorescence with increased blueness was obtained.

In Modification 2, a study was conducted on a fluorescent inspection liquid obtained by adding rhodamine B to the flavin derivative of the present embodiment. An aqueous solution of rhodamine B emits orange fluorescence. In the present modification, a fluorescent inspection liquid that emitted purple fluorescence was obtained by mixing the flavin derivative of the present embodiment and rhodamine B. In addition, it was confirmed that, when the ratio of the flavin derivative was increased in the fluorescent inspection liquid of the present modification, the color became bluish from pinkish purple, and a fluorescent inspection liquid that emitted bluish purple fluorescence was obtained.

Modification 1 and Modification 2 described above enable the fluorescent inspection liquid to be multicolored. According to the present modification, it is possible to increase the options of the color of the fluorescent inspection liquid, and it is possible to provide a fluorescent inspection liquid having a fluorescent color with excellent visibility according to the installation environment of the inspection target.

It should be noted that the present invention is not limited to the above disclosure, and various modifications are possible without departing from the essence and gist of the present invention. The following supplementary notes are further disclosed in relation to the above-described disclosure.

### (Supplementary Note 1)

An aspect is characterized by the fluorescent inspection liquid containing: water; and the flavin derivative as a blue fluorescent dye that emits blue fluorescence, wherein the flavin derivative is a derivative having a flavin skeleton and prepared using riboflavin as a starting material. This fluorescent inspection liquid is highly safe for the human body and emits blue fluorescence with high fluorescence brightness, and therefore can be suitably used for leak inspections in various fields.

### (Supplementary Note 2)

The fluorescent inspection liquid according to Supplementary Note 1 may contain the flavin derivative at a concentration of 5 ppm or higher and 20 ppm or lower. This fluorescent inspection liquid is below the sewage discharge standard, and has a small load on the environment.

### (Supplementary Note 3)

The fluorescent inspection liquid according to Supplementary Note 1 or 2 may further contain a preservative. In this fluorescent inspection liquid, the decay (decomposition) of the flavin derivative as the fluorescent agent can be prevented.

### (Supplementary Note 4)

In the fluorescent inspection liquid according to any one of Supplementary Notes 1 to 3, the blue fluorescent dye may contain at least one of formylmethylflavin or lumichrome as a main component. This fluorescent inspection liquid is excellent in safety and emits blue fluorescence excellent in visibility by being irradiated with ultraviolet light, and therefore can be suitably used for a leak inspection.

## Claims

1. A fluorescent inspection liquid containing: water; and a flavin derivative as a blue fluorescent dye that emits blue fluorescence, wherein the flavin derivative is a derivative having a flavin skeleton and prepared using riboflavin as a starting material.

2. The fluorescent inspection liquid according to claim 1, wherein the fluorescent inspection liquid contains the flavin derivative at a concentration of 5 ppm or higher and 20 ppm or lower.

3. The fluorescent inspection liquid according to claim 1 or 2, further containing a preservative.

4. The fluorescent inspection liquid according to claim 1 or 2, wherein the blue fluorescent dye contains at least one of formylmethylflavin or lumichrome as a main component.

## Amended claims

### Amended claims under Art. 19.1 PCT

1. (Amended) A fluorescent inspection liquid containing: water; and a flavin derivative as a blue fluorescent dye that emits blue fluorescence, wherein the flavin derivative is a derivative having a flavin skeleton and prepared using riboflavin as a starting material, and
the blue fluorescent dye contains at least one of formylmethylflavin or lumichrome as a main component.

2. The fluorescent inspection liquid according to claim 1, wherein the fluorescent inspection liquid contains the flavin derivative at a concentration of 5 ppm or higher and 20 ppm or lower.

3. The fluorescent inspection liquid according to claim 1 or 2, further containing a preservative.

4. (Canceled)
